Europäisches Patentamt

European Patent Office

Office européen des brevets

(11) Publication number: **0 098 310**
**B1**

# EUROPEAN PATENT SPECIFICATION

(45) Date of publication of patent specification: **11.06.86**

(51) Int. Cl.⁴: **G 03 B 21/58**

(21) Application number: **83900283.9**

(22) Date of filing: **11.01.83**

(86) International application number:
**PCT/JP83/00011**

(87) International publication number:
**WO 83/02503 21.07.83 Gazette 83/17**

(54) **AUTOMATIC SCREEN.**

(30) Priority: **11.01.82 JP 2012/82 u**

(43) Date of publication of application:
**18.01.84 Bulletin 84/03**

(45) Publication of the grant of the patent:
**11.06.86 Bulletin 86/24**

(84) Designated Contracting States:
**FR**

(56) References cited:
**GB-A- 717 448**
**JP-Y-30 004 136**
**US-A-2 812 808**
**US-A-4 281 352**

(73) Proprietor: **SONY CORPORATION**
**7-35 Kitashinagawa 6-Chome Shinagawa-ku Tokyo 141 (JP)**

(72) Inventor: **NUMATA, Kiyoshi**
**Sony Corp. Osaki Plant 10-14 Osaki 2-chome Shinagawa-ku Tokyo 141 (JP)**
Inventor: **YOSHIDA, Toshihiro**
**Sony Corp. Osaki Plant 10-14 Osaki 2-chome Shinagawa-ku Tokyo 141 (JP)**
Inventor: **KOKUBO, Takashi**
**Sony Corp. Osaki Plant 10-14 Osaki 2-chome Shinagawa-ku Tokyo 141 (JP)**

(74) Representative: **Thomas, Christopher Hugo et al**
**D Young & Co 10 Staple Inn London WC1V 7RD (GB)**

Courier Press, Leamington Spa, England.

**Description**

This invention relates to projection screen assemblies suitable for a video projector or the like.

In a video projection system, an image is uaually projected from a projector onto a projection screen via a reflector, and the projection screen is usually supported by screen poles.

This type of screen is large in size, so can only be installed in comparatively large rooms. Moreover, the screen surface is exposed at all times, so that it is liable to be contaminated by dust and become less reflective.

UK patent specification GB—A—717448 discloses a viewing screen assembly including a rigid screen and a housing from which the screen is withdrawable in an upward direction.

US patent specification US—A—4 281 352 discloses a compact projection television system including an enclosure, a movable front portion of which downwardly hinges open and in so doing unfolds projection optics and, through linkages, raises a screen.

According to the present invention there is provided a screen assembly comprising:

a projection screen;

a cabinet capable of accommodating said screen in a stowed position in said cabinet and having a front door for opening and closing the front of said cabinet; and

a common driving mechanism for simultaneously moving said screen and said front door;

said screen and said front door being coupled together so as to be capable of being relatively moved so that said screen can be raised to an operative position or lowered to said stowed position as said front door is lowered or raised respectively; and

when said screen is in said stowed position said front door closing an upper part of the front of said cabinet;

characterised in that:

said screen is substantially equal in·weight to said front door;

said driving mechanism causes said screen and said front door to move substantially vertically past one another with said front door acting as a counter-weight for said screen so as to reduce the load on said driving mechanism; and

said driving mechanism raises said screen to said operative position as said front door moves from an upper position covering an upper part of said screen to a lower position below the bottom edge of said screen.

When using embodiments of the screen assembly for projection of an image onto the screen, the screen is brought to the operative position projecting from the cabinet concurrently with the opening of the cabinet front door, and is held at the operative position. After use, the screen can be stowed in the cabinet and the cabinet front door is closed, so the cabinet looks like an ordinary piece of furniture.

The invention will now be described by way of example with reference to the accompanying drawings, throughout which like parts are referred to by like references, and in which:

Figure 1 shows perspective views of an embodiment of screen assembly according to the present invention, with Figure 1(A) showing the assembly with the projection screen stowed, and Figure 1(B) showing the projection screen in the operative projection position;

Figure 2 shows diagrammatic side views of the screen assembly, with Figure 2(A) showing the screen stowed, Figure 2(B) showing the screen being moved out of or into a cabinet, and Figure 2(C) showing the projection screen in the operative position;

Figure 3 is a perspective rear view showing the internal construction of the screen assembly; and

Figure 4 is a rear perspective view showing the internal construction of an alternative embodiment of screen assembly according to the present invention.

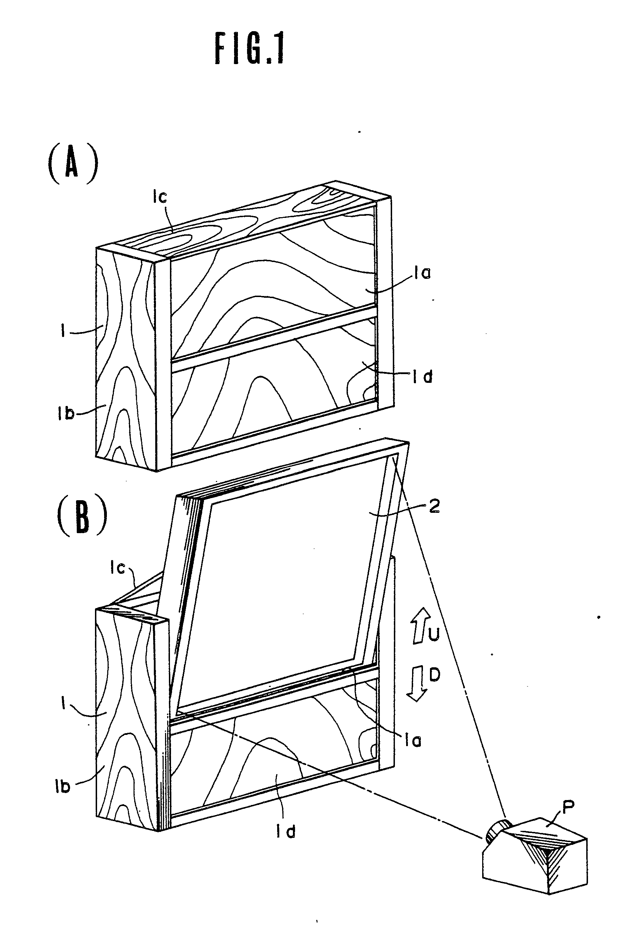

As shown in Figure 1, a cabinet 1 of the screen assembly has a box-like shape with a grain-like pattern provided on its outer surface 1b. When the screen assembly is out of use, the cabinet 1 accommodates a projection screen 2. When the screen 2 is in use, the cabinet 1 serves as a support to hold the screen 2 in an operative position such that images can be projected thereon.

The upper half of the front of the cabinet 1 is formed by a front door 1a which is movable in the vertical direction. The top of the cabinet 1 is formed by a top cover 1c with the rear edge thereof hinged by a hinge mechanism for opening and closing. The lower half of the front of the cabinet 1 has a stationary front panel 1d. When the front door 1a is opened, it is accommodated in the cabinet behind the front panel 1d.

The cabinet 1 accommodates a coupling mechanism and a driving mechanism for causing relative movement of the front door 1a and the screen 2, and to be described in detail below.

When using the screen 2 for projection, the front door 1a is moved and opened in the direction of an arrow D in Figure 1(B). The screen 2 is thus brought to a forwardly tilted position by movement in the direction of an arrow U, so that an image can be projected thereon by a projector P.

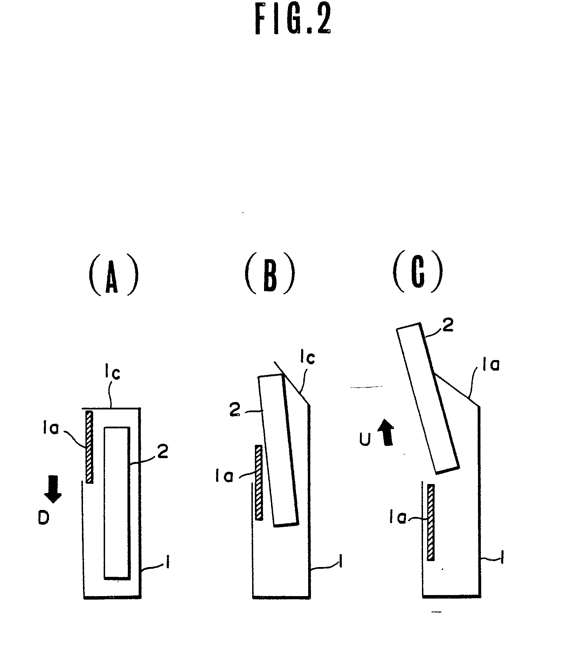

The relation between the front door 1a, the screen 2 and the top cover 1c will now be described in detail with reference to Figures 2(A), 2(B) and 2(C). As shown in Figure 2(A), the front door 1a closing the upper half of the front of the cabinet 1 is lowered in the direction of the arrow D by the coupling mechanism and the driving mechanism, and concurrently the screen 2 is moved, while pushing open the top cover 1c, to a position at which it is exposed and tilted.

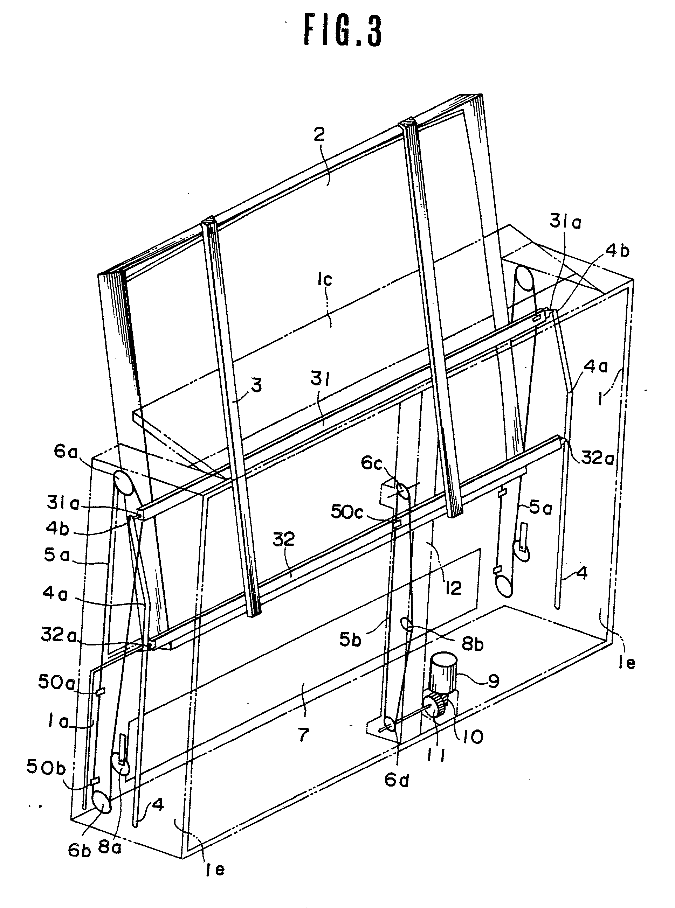

An example of the coupling mechanism and the driving mechanism for causing relative movement of the front door 1a and the screen 2 will now be described with reference to Figure 3.

The screen 2 is mounted on a screen bracket structure 3 comprising angular members assembled into a lattice-like form. The bracket structure 3 is constructed suth that it has sufficient mechanical strength against bending, twisting and other deformations despite a simple and light-weight structure.

Transversal screen brackets 31 and 32 of a length substantially equal to the width of the cabinet 1 have at their opposite ends engagement portions 31a and 32a which are slidably engaged with slide rails 4 provided on the opposite side inner walls 1e of the cabinet 1. The slide rails 4 each have an upper portion inclined towards the front of the cabinet 1 from an intermediate portion 4a. The screen 2 thus can be held in a position suitably forwardly tilted when it is used for projection. Rail portions below the intermediate portion 4a extend vertically, so that the screen 2 can be guided vertically when it is brought into the cabinet 1 to be stowed.

The coupling mechanism for causing relative movement of the screen 2 and front door 1a will now be described.

Chains 5a for causing the relative movement have their intermediate portions secured to the neighbourhood of the opposite ends of the transversal bracket 31, and pass around pairs of sprockets 6a and 6b rotatably supported on upper and lower portions respectively of the opposite inner side walls 1e of the cabinet 1. Securing members 50a and 50b secure the inner surface of the front door 1a to the chains 5a between the sprockets 6a and 6b.

The front door 1a and screen 2 are thus coupled together by the chains 5a in a well-bucket fashion, so their weights are counter-balanced, and as one rises the other falls.

When the front door 1a is lowered, the screen 2 is moved upwards, guided by the slide rails 4, so that the top cover 1c of the cabinet 1 is raised and pushed up by the upper edge of the screen 2.

The upward movement of the screen 2 is stopped when the engagement portions 31a strike upper end portions 4b of the slide rails 4, whereby a stable position is obtained. When the screen 2 is to be stowed in the cabinet 1, the chains 5a around the sprockets 6a and 6b are pulled by the screen 2 being lowered, whereby the front door 1a is pulled up to the initial position.

The front door 1a has a weight 7 secured to its inner side to make the weights of the front door 1a and of the screen 2 substantially equal. The relative movement of the screen 2 and the front door 1a therefore only needs a small force.

The chains 5a are held taut with a constant tension by tighteners 8a provided on the opposite side inner walls 1e of the cabinet 1.

The driving mechanism for causing the relative movement of the screen 2 and the front door 1a comprises a motor 9 installed in the cabinet 1. A vertical lifter base 12 is embedded in and projects from a central portion of the inner side of the cabinet 1. A chain 5b passes around a sprocket 6c mounted on the lifter base 12 and a sprocket 6d coupled to the motor 9, and is secured by a securing member 50c to a central portion of the screen bracket 32. A tightener 8b is provided on the lifter base 12 to make the coupling of the chain 5b to the sprockets 6c and 6d reliable.

With the driving mechanism described above provided at the central portion of the screen 2, satisfactory lateral balance can be obtained, and the screen 2 can be stably and smoothly moved out of and into the cabinet 1.

In the driving mechanism, the transmission of driving force is by a worm 10 mounted on a drive shaft of the motor 9 and engaging with a worm wheel 11 mounted on the same shaft as the sprocket 6d. The driving speed of the motor 9 is thus reduced through the worm 10 and the worm wheel 11, so as to be transmitted to the sprocket 6d, whereby the chain 5b is pulled to cause vertical movement of the screen 2. The switching of the directions of the vertical movement of the screen 2 may be done by switching the directions of rotation of the motor 9 through the switching of a power source switch (not shown).

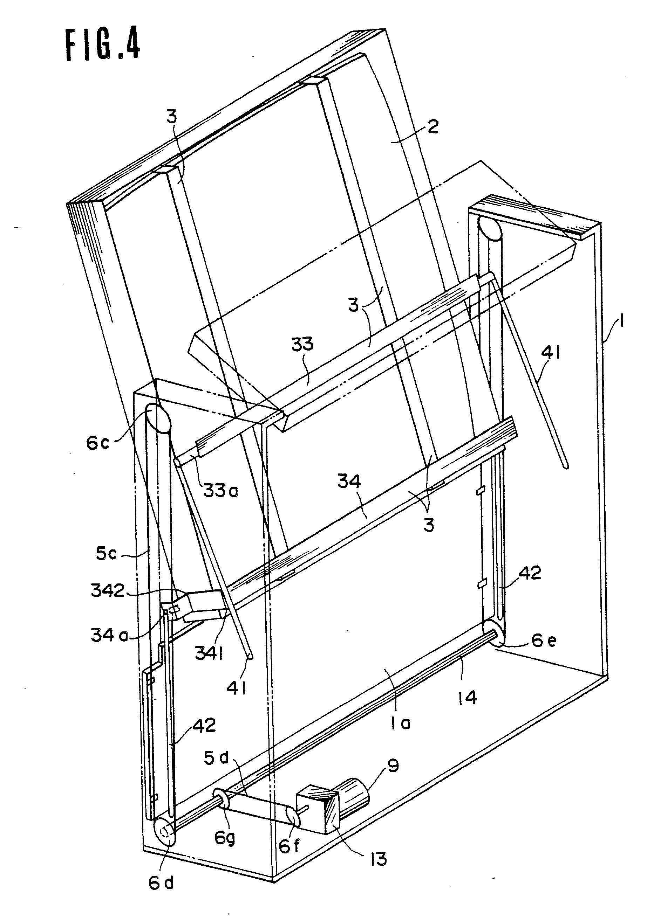

An alternative embodiment having a different coupling mechanism and driving mechanism will now be described with reference to Figure 4.

The screen bracket 3 in this embodiment, like that in the preceding embodiment, has a structure comprising angular members assembled in a lattice-like form. In this embodiment, however, slide rails 41 and 42 are different from those in the preceding embodiment, so that the engagement portions of transversal screen brackets 33 and 34 have a different shape.

To be more specific, the slide rails 41 guide the screen 2 to a forwardly tilted position, while the other slide rails 42 guide the lower end of the screen 2 in vertical directions. The engagement portions 33a provided at opposite ends of one screen bracket 33 are engaged with the slide rails 41 for guiding the screen 2, while the engagement portions 34a provided at the opposite ends of the other screen bracket 34 are engaged with the slide rails 42 for vertically guiding the lower portion of the screen 2. The screen bracket 34 is bent at a point 341 such that the bent portion extends along the side wall of the screen 2, and is bent at another point 342 such that the bent portion extends outwardly of the screen 2 to reach the slide rails 42.

Chains 5c coupling the screen 2 and the front door 1a are secured to the engagement portions 34a provided at the ends of the screen bracket 34. The chains 5c pass around a pair of sprockets 6c, 6d; and unreferenced, 6e; provided on upper and lower portions of the inner wall of the cabinet 1 at each side, and are secured to the inner side of the front door 1a, so that the screen 2 and the front door 1a are moved relative to one another.

In the driving mechanism in this embodiment, the driving force of the motor 9 provided in the cabinet 1 is transmitted through a speed reduction gear train provided in the cabinet 1 and a pair of sprockets 6f and 6g to a driving shaft 14 provided between left and right sprockets 6d and 6e of the coupling mechanism. The sprocket 6f is provided on a shaft on which a gear coupled to the motor 9 is mounted. The other sprocket 6g serves to rotate the driving shaft 14. The two sprockets 6f and 6g are coupled together by a chain 5d. The driving force of the motor 9 is transmitted through the sprockets 6f and 6g to the driving shaft 14 so as synchronously to drive the pair of sprockets 6c and 6d and drive the chain 5c to pass around the sprockets 6c and 6d, and the sprocket 6e and its associated chain 5c, thereby causing relative movement of the screen 2 and front door 1a.

## Claims

1. A screen assembly comprising:
a projection screen (2);
a cabinet (1) capable of accommodating said screen (2) in a stowed position in said cabinet (1) and having a front door (1a) for opening and closing the front of said cabinet (1); and
a common driving mechanism (9) for simultaneously moving said screen (2) and said front door (1a);
said screen (2) and said front door (1a) being coupled together so as to be capable of being relatively moved so that said screen (2) can be raised to an operative position or lowered to said stowed position as said front door (1a) is lowered or raised respectively; and
when said screen (2) is in said stowed position said front door (1a) closing an upper part of the front of said cabinet (1);
characterised in that:
said screen (2) is substantially equal in weight to said front door (1a);
said driving mechanism (9) causes said screen (2) and said front door (1a) to move substantially vertically past one another with said front door (1a) acting as a counter-weight for said screen (2) so as to reduce the load on said driving mechanism (9); and
said driving mechanism (9) raises said screen (2) to said operative position as said front door (1a) moves from an upper position covering an upper part of said screen (2) to a lower position below the bottom edge of said screen (2).

2. A screen assembly according to claim 1 wherein movement of said screen (2) is guided by a guide rails (4) provided in said cabinet (1) so that said screen (2) assumes a forwardly tilted position relative to said cabinet (1) when in said operative position and a vertical position when in said stowed position.

3. A screen assembly according to claim 1 or claim 2 wherein said cabinet (1) has a top cover (1a) hinged to the top of said cabinet (1) and which opens and closes the top of said cabinet (1) as said screen (2) moves between said positions.

4. A screen assembly according to claim 1, claim 2 or claim 3 wherein said front door (1a) carries a weight (7) so as substantially to equalize the weight of said screen (2) and said front door (1a).

## Patentansprüche

1. Bildschirmanordung
mit einem Projektionsschirm (2),
ferner mit einem Gehäuse (1), in welchem der Projektionsschirm (2) in einer Stauposition aufnehmbar ist und das eine Vordertür (1a) zum Öffnen und Verschließen der Gehäusevorderseite aufweist,
sowie mit einem gemeinsamen Antriebsmechanismus (9), durch den der Projektionsschirm (2) und die Vordertür (1a) des Gehäuses (1) gleichzeitig bewegbar sind,
wobei der Projektionsschirm (2) und die Vordertür (1a) in der Weise miteinander gekuppelt sind, daß sie relativ zueinander derart bewegbar sind, daß der Projektionsschirm (2) in eine Betriebsposition angehoben oder in die Stauposition abgesenkt werden kann, wenn die Vordertür (1a) abgesenkt bzw. angehoben wird,
und wobei die Vordertür (1a) einen oberen Abschnitt der Vorderseite des Gehäuses (1) verschließt, wenn der Projektionsschirm (2) sich in der genannten Staustellung befindet,
dadurch gekennzeichnet,
daß der Projektionsschirm (2) im wesentlichen das gleiche Gewicht hat wie die Vordertür (1a),
daß der Antriebsmechanismus (9) bewirkt, daß der Projektionsschirm (2) und die Vordertür (1a) sich hintereinander im wesentlichen vertikal bewegen, wobei die Vordertür (1a) ein Gegengewicht für den Projektionsschirm (2) bildet, so daß die auf den Antriebsmechanismus (9) einwirkende Belastung verringert wird,
und daß der Antriebsmechanismus (9) den Projektionsschirm (2) in die Betriebsposition anhebt, wenn die Vordertür (1a) sich von einer oberen Position, in der sie einen oberen Abschnitt des Projektionsschirms (2) abdeckt, in eine unterhalb der Unterkante des Projektionsschirms (2) liegende untere Position bewegt.

2. Bildschirmanordnung nach Anspruch 1, bei der der Projektionsschirm (2) bei seiner Bewegung in an dem Gehäuse (1) vorgesehenen Führungsschienen (4) derart geführt ist, daß er (2) relativ zu dem Gehäuse (1) nach vorn geneigt ist, wenn er sich in der Betriebsposition befindet, hingegen eine vertikale Stellung hat, wenn er sich in der Stauposition befindet.

3. Bildschirmanordnung nach Anspruch 1 oder 2, bei der das Gehäuse (1) eine obere Abdeckung (1c) besitzt, die an der Oberseite des Gehäuses (1) angelenkt ist und die Oberseite des Gehäuses öffnet bzw. verschließt, wenn der Projektionsschirm (2) sich zwischen den beiden genannten Positionen bewegt.

4. Bildschirmanordnung nach Anspruch 1, 2 oder 3, bei der die Vordertür (1a) ein Gewicht (7) trägt, durch welches die Gewichte des Projektionsschirms (2) und der Vordertür (1a) im wesentlichen aneinander angeglichen werden.

## Revendications

1. Ensemble constituant un écran et comportant:

un écran de projection (2);

un meuble (1) pouvant loger ledit écran (2) en position de rangement dans ledit meuble (1) et présentant une porte avant (1a) pour ouvrir et fermer l'avant du dit meuble (1); et

un mécanisme commun d'entraînement (9) pour déplacer simultanément ledit écran (2) et ladite porte avant (1a);

ledit écran (2) et ladite porte avant (1a) étant couplés ensemble de façon à pouvoir être déplacés de façon relative de sorte que ledit écran (2) puisse être levé en position opérationnelle ou abaissé en ladite position de rangement alors que ladite porte avant (1a) est abaissée ou levée, respectivement; et de sorte que lorsque ledit écran (2) est en ladite position de rangement, ladite porte avant (1a) vient fermer une partie supérieure de l'avant du dit meuble (1); caractérisé

en ce que ledit écran (2) est d'un poids sensiblement égal à celui de ladite porte avant (1a);

en ce que ledit mécanisme d'entraînement (9) fait que ledit écran (2) et ladite porte avant (1a) se déplacent sensiblement verticalement au-delà l'un de l'autre, ladite porte avant (1a) agissant comme contrepoids pour ledit écran (2) de façon à réduire la charge sur ledit mécanisme d'entraînement (9); et

en ce que ledit mécanisme d'entraînement (9) élève ledit écran (2) à ladite position opérationnelle à mesure que ladite porte avant (1a) passe d'une position supérieure, couvrant une partie supérieure du dit écran (2), à une position inférieure, en-dessous du bord inférieur du dit écran (2).

2. Ensemble constituant un écran selon la revendication 1, dans lequel le déplacement du dit écran (2) est guidé par des rails de guidage (4) prévus dans ledit meuble (1) de façon que ledit écran (2) prenne une position inclinée en avant par rapport au dit meuble (1) lorsqu'il est en ladite position opérationnelle et une position verticale lorsqu'il est en ladite position de rangement.

3. Ensemble constituant un écran selon la revendication 1 et la revendication 2, dans lequel ledit meuble (1) présente un couvercle supérieur (1c) articulé par charnière en haut du dit meuble (1) et qui ouvre et ferme le haut du dit meuble (1) à mesure que ldeit écran (2) se déplace entre lesdites positions.

4. Ensemble constituant un écran selon la revendication 1, la revendication 2 ou la revendication 3, dans lequel ladite porte avant (1a) porte un poids (7) de façon à rendre sensiblement égaux les poids du dit écran (2) et de ladite porte avant (1a).

0 098 310

# FIG.1

(A)

(B)

# FIG.2

(A)     (B)     (C)

# FIG.3

# FIG.4